# EUROPEAN PATENT SPECIFICATION

(11) **EP 3 390 289 B1**
(45) Date of publication and mention of the grant of the patent: **12.08.2020**
(21) Application number: 16834037.0
(22) Date of filing: 16.12.2016
(51) Int. Cl.: C02F 3/30

(54) **ASSEMBLY FOR THE AUTOMATED MANAGEMENT OF PLANTS FOR THE BIOLOGICAL TREATMENT OF WASTEWATER**
ANORDNUNG ZUR AUTOMATISIERTEN VERWALTUNG VON ANLAGEN ZUR BIOLOGISCHEN BEHANDLUNG VON ABWASSER
ENSEMBLE POUR LA GESTION AUTOMATISÉE D'USINES POUR LE TRAITEMENT BIOLOGIQUE D'EAUX USÉES

(30) Priority: 16.12.2015 IT UB20159572
(43) Date of publication of application: 24.10.2018
(73) Proprietor: Agenzia Nazionale Per Le Nuove Tecnologie, L'Energia E Lo Sviluppo Economico Sostenibile (ENEA), 00198 Roma (IT)
(72) Inventor: LUCCARINI, Luca, 00198 Roma (IT)
(74) Representative: Bosman, Cesare
(86) International application number: PCT/IB2016/057722
(87) International publication number: WO 2017/103880

(56) References cited:
- EP-A1- 1 518 830
- ES-A1- 2 345 090
- KR-B1- 101 503 643

## Description

### TECHNICAL FIELD

The present invention concerns an assembly for the automated management of plants for the biological treatment of wastewater.

### BACKGROUND ART

In particular, the present invention relates to continuous flow plants for the biological treatment of wastewater having a denitrification/nitrification process.

These types of plants substantially comprise a first tank called "anoxic", in which the denitrification process takes place, and a tank called "aerobic", in which the nitrification process takes place. The two tanks are hydraulically connected to each other by means of a recirculation system.

The nitrification process consists in oxidisation of the ammonia by the action of the oxygen. The ammonia is oxidised first to nitrites, as an intermediate reaction, and then to nitrates, as a final reaction.

The denitrification process consists in reduction of the nitrates first to nitrites and then to molecular nitrogen by the action of bacteria in an environment without oxygen and in the presence of biodegradable organic substance.

As is known to a person skilled in the art, the energy and production efficiency of the processes described above depends closely on the ratio of the concentrations of the compounds involved in the oxidisation and reduction reactions respectively. In particular, the nitrification process entails the consumption of molecular oxygen which is purposely blown into the aerobic tank, while the denitrification process entails the consumption of biodegradable organic substance present in the wastewater and necessary for the activity of the bacteria.

In other words, in the continuous flow activated sludge systems, the wastewater is treated continuously in the aerobic tank, where oxidisation of the ammonia produces first nitrites and then nitrates, due to the action of the molecular oxygen purposely blown in, and in the anoxic tank for transformation of the nitrates first into nitrites and then into molecular nitrogen by means of the denitrifying bacteria and biodegradable organic substance. As anticipated above, the tanks in which the oxidisation and reduction processes take place are connected to each other by a recirculation system comprising a recirculation pump for conveying the water from the aerobic tank to the anoxic tank.

The effectiveness of the denitrification process that takes place in the anoxic tank is a function of the ratio between the quantity of biodegradable organic material and the quantity of nitrites and nitrates recirculated from the aerobic tank.

For some time, the need has been felt for an instrument able to continuously verify the nitrification and denitrification processes in progress in order to intervene to improve their efficiency in terms of wastewater treatment and energy consumption.

Currently, in small and medium-sized plants, the variability of the ratio between the quantity of biodegradable organic material and the quantity of nitrites and nitrates in the anoxic tank, due to the variability of the incoming load, is not managed since the flow rate of the recirculation pump is maintained constant. In only a few rare cases is the recirculation flow rate varied manually by an operator on the basis of his professional experience. Obviously, this situation cannot meet the required efficiency and productivity needs.

The instrumentation used so far for this type of plant consists in a plurality of probes, each of which is specific for one of the compounds involved in the oxidisation and reduction processes. This instrumentation suffers from the drawback of being particularly costly and, therefore, can be applied only to plants with dimensions that justify the expense.

ES2345090 discloses a control system for the biological elimination of nitrogen from waste water through low-cost sensors. The control system is based on fuzzy logic permitting optimisation of the biological elimination of nitrogen in continuous predenitrification-type processes having piston-flow circulation or in complete mix reactors. The reactors are required to have at least two differentiated aerobic zones and two differentiated anoxic zones. This control system is based on the use of low-cost sensors of pH and ORP type.

The need is particularly felt for an automatic method for effectively managing the blowing of oxygen into the aerobic tank. In fact, the oxygen requirement varies according to the quality of the wastewater which in turn varies throughout the day. To understand the importance of this aspect, it should be highlighted that the consumption of oxygen in the above plants is responsible for approximately 75% of the energy consumption.

### DISCLOSURE OF INVENTION

The object of the present invention is to provide an automated method for the management of plants for the biological treatment of wastewater, the technical characteristics of which are such as to improve the efficiency of said treatment and, at the same time, ensure running costs which are limited and, therefore, advantageous also for small and medium-sized plants.

The subject of the present invention is a wastewater treatment plant, the essential characteristics of which are described in claim 1 and the preferred and/or auxiliary characteristics of which are described in claim 2.

A further subject of the present invention is a method for the automated management of plants for the biological treatment of wastewater, the essential characteristics of which are described in claim 3 and the preferred and/or auxiliary characteristics of which are described in claim 4.

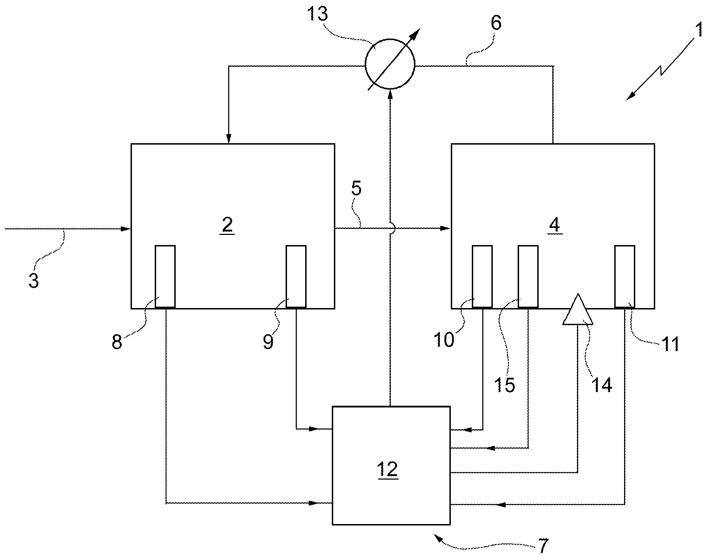

### BRIEF DESCRIPTION OF THE DRAWING

The following example is provided for illustrative non-limiting purposes, for a better understanding of the invention with the help of the figure of the accompanying drawing, which illustrates in an extremely schematic manner the assembly subject of the present invention applied to a water treatment plant shown only partially.

### BEST MODE FOR CARRYING OUT THE INVENTION

The figure shows overall by the number 1, and in an extremely schematic manner, a continuous flow plant for the treatment of wastewater with parts removed for the sake of simplicity.

The plant 1 comprises an anoxic tank 2 supplied by the wastewater coming from a supply system 3 of the water to be treated, an aerobic tank 4 designed to receive the water coming from the anoxic tank 2 by means of the transfer pipes 5, and a recirculation system 6 designed to recirculate the water from the aerobic tank 4 to the anoxic tank 2.

The plant 1 provides continuous flow biological treatment of the wastewater having a predenitro/nitro process. The plant 1 is supplied with wastewater comprising nitrogen and biodegradable organic material. The nitrogen arrives mainly in the form of ammonia (60-80%) and organic nitrogen, divided into soluble and particulate. Both are subsequently converted into ammonia. The organic nitrogen component becomes soluble via the ammonification process, while the particulate component becomes soluble via the hydrolysis process. The ammonia is removed in two stages: nitrification and denitrification. The former converts the ammonia into nitrates while the latter converts the nitrates into free nitrogen.

The nitrification process takes place exclusively in the presence of oxygen and is carried out by a group of autotrophic microorganisms, called nitrifying microorganisms. The conditions in which the dissolved oxygen is present are called aerobic conditions. The denitrification process, on the other hand, is carried out by heterotrophic microorganisms, called denitrifying microorganisms, in the absence of oxygen. The conditions in which the dissolved oxygen is not present are called anoxic conditions. In anoxic conditions the denitrifying microorganisms can convert the organic material and the nitrates into free nitrogen and carbon dioxide, causing the microorganisms to grow. Since the conditions in which the two processes take place are different, they necessarily have to take place in separate tanks and the plant 1 currently represents the most commonly adopted solution.

In the aerobic tank the nitrification process takes place, which consists in oxidisation of the ammonia nitrogen with oxygen to produce first nitrites (intermediate reaction) and then nitrates (final reaction). In the anoxic tank, the denitrification process takes place, in anoxic conditions and in the presence of biodegradable organic material, in which the nitrogen of the nitrates and/or of the nitrites is reduced to molecular nitrogen.

In the figure, the number 7 indicates overall an assembly for management of the continuous flow plant for treatment of the wastewater according to a non-limiting embodiment of the present invention.

The assembly 7 comprises a pH measuring probe 8 housed inside the anoxic tank 2, a redox potential measuring probe 9 also housed inside the anoxic tank 2, a pH measuring probe 10 housed inside the aerobic tank 4, a dissolved oxygen measuring probe 15 also housed inside the aerobic tank 4, a control unit 12 arranged to receive the signals from the probes 8, 9, 10 and 15, a variable-capacity pump 13 inserted in the recirculation system 6 and controlled by the control unit 12, and a blower 14 arranged to blow the oxygen in a variable quantity into the aerobic tank and controlled by the control unit 12.

The control unit 12 receives the pH and redox potential information from the probes 8, 9 and 10 and, on the basis of the description provided below, accordingly regulates the flow rate of the pump 13 and the blowing in of air by the blower 14, by measurement of the dissolved oxygen.

The inventor of the present invention has identified three redox operating ranges for the denitrification process in the anoxic tank 2. The first operating range is characterized by a positive redox potential value above +50 mV (indicatively around 100 mV), which indicates an incomplete denitrification process, due to the fact that a part of the NOₓ (nitrates and/or nitrites) present in the tank have not been reduced to N₂; the second operating range is characterized by very negative redox potential values below - 250 mV (generally below -300 mV), which indicates an excess of biodegradable organic material relative to the quantity of NOₓ present in the tank which could, on the other hand, be used to denitrify a further quantity of nitrates and nitrites; the third operating range, characterized by negative redox potential values between -200mV and -50mV, is characterized by concentrations of NOₓ near to zero, and indicates a correct and balanced ratio between the biodegradable organic material and the nitrogen to be denitrified.

The control unit 12, via the redox potential measuring probe 9, receives information on which of the three operating ranges the denitrification process is working in and, adopting control logics with the pH signal and the parameters previously set as a reference, communicates to the pump 13 the correct flow rate to be assumed. In particular: the control unit 12 (a) if it receives information that the denitrification process is in the first redox range, will send the command to the recirculation pump 13 to reduce its flow rate so as to reduce the quantity of nitrites and nitrates present in the anoxic tank 2, and will begin to monitor the pH signal, since it is a direct and rapid indicator of the course of the denitrification process. In fact, this signal will begin to increase with the change in flow rate of the recirculation pump and must continue to do so until a maximum point is reached. If a negative value for the redox potential signal also corresponds to this point, the internal recirculation flow rate can be validated as the reference flow rate. If, on the other hand, the redox potential value remains positive, the recirculation flow rate must be further reduced until when, at the maximum reached by the pH signal, the redox potential signal tends to an asymptote within the range corresponding to the third operating range; (b) if it receives the information that the denitrification process is in the second redox range, it will send the command to the recirculation pump 13 to increase its flow rate so as to increase the quantity of nitrites and nitrates present in the anoxic tank 2, until when, always monitoring the pH signal dynamics, the redox potential signal again reaches the values corresponding to the third operating range; (c) if it receives the information that the denitrification process is in the third redox range, it will not command the recirculation pump 13 to modify the flow rate.

From the pH measuring probe 8, the control unit 12 receives information on the passage from operation according to the first or the second redox range to correct operation of the third redox range. Lastly, the dynamic analysis of the correlation between pH and redox potential (Pearson coefficient) allows completion of the passage between the above-mentioned operating ranges to be determined in a unique manner.

In other words, in the control unit 12 the information is set relative to the three redox ranges and the consequent responses of the recirculation pump 13 in terms of flow rate. In this way, if, due to an unbalanced ratio between biodegradable organic material and quantity of nitrates and/or nitrites, the process is not able to function structurally, the management assembly of the present invention can verify it and intervene to overcome the deficit if it is not structural. If the deficit of organic substance is structural, the system is able to drive an external metering pump for input of the organic substance strictly necessary to complete the denitrification process.

Similarly, the nitrification process in the aerobic tank 4 can be controlled via continuous measurement and processing of the pH values obtained from the probe 10. Typically, at the inlets to the domestic waste treatment plants, especially medium and small-size plants, the pollution load can be characterized, in terms of flow rate and concentrations, in three ways: high load (in the morning), medium load (in the afternoon) and low load (during the night). By continuous analysis of the pH signals, it is possible to identify the beginning and end of all the above-mentioned load modes, thus allowing differentiated management thereof.

In particular, the greater the nitrogen load difference in the aerobic tank 4 for the three modes, the more evident the pH difference between one mode and the other.

Having identified the neighbourhoods of the initial and end mode time instants, ad *hoc* management (according to the actual polluting load at the inlet) of the aeration system is possible, the latter being, as previously mentioned, responsible for approximately 75% of the plant energy consumption.

The control unit 12 will command the flow rate of the blower 14 according to the load mode, identified by analysis of the pH signal transmitted to it by the probe 10. In particular, the control unit 12 will command the blower 4 to increase the flow rate of O₂ in the high load mode and reduce it when the load is medium and low.

To control the blowing of oxygen into the oxidization tank, a PID controller is provided to regulate the flow rate of the blower by means of inverter, using the DO as a controlled variable and fixing the set-point at a (variable) value which will be a function of the current status of the process, i.e. high, medium or low load.

The numerical analysis carried out with the pH measuring probe 10 communicates to the control unit 12 the load status at the inlet as anticipated above, and the control unit, on the basis of previously set parameters, responds by setting the set-point of the PID regulator on the dissolved oxygen, measured with the probe 15, for example, to a value of 2 mg/l when the load is high, 1 mg/l when there is a medium load at the inlet and 0.5 mg/l when the load at the inlet is low.

Assuming a plant already having a constant PID type control (with oxygen set-point fixed at 2 mg/l, for example) and with a maximum load which is discharged in approximately 7-9 hours, the consumption in the other 16-17 hours, which can be divided into medium and low load, with estimated duration of 7-9 hours each, will be at least more than halved thanks to the invention, with a saving in energy consumption of over 40%. Optimization of the system will undoubtedly result in increased savings.

The present invention overcomes the limit of the lack of technological equipment in many medium and small-sized plants due to the high costs involved, making it financially unsustainable. In fact, for production of the proposed system, only robust, reliable, low-cost probes are used, such as the pH and redox potential measuring probes, which allow control systems to be produced at more advantageous costs than the current ones.

## Claims

1. A wastewater treatment plant (1) comprising an anoxic tank (2), in which a denitrification process takes place, an aerobic tank (4), which is designed to receive wastewater to be treated from said anoxic tank (2) and in which a nitrification process takes place, a recirculation system (6), which is designed to transfer wastewater to be treated from the aerobic tank (4) to the anoxic tank (2), and an assembly (7) for the management of said wastewater treatment plant, wherein said assembly (7) comprises a pH measuring probe (8), which is housed on the inside of said anoxic tank (2), a redox potential measuring probe (9), which is housed on the inside of the anoxic tank (2), a control unit (12), which is designed to receive signals from the pH measuring probe (8) and the redox potential measuring probe (9), and a variable-capacity recirculation pump (13), which is inserted in said recirculation system (6) and is controlled by the control unit (12); said control unit (12) being designed:
(a) to send a command to the variable-capacity recirculation pump (13) to reduce the flow rate if the redox potential measuring probe (9) detects a value higher than + 50 mV, and to begin monitoring the pH signal from the pH measuring probe (8), said signal from the pH measuring probe (8) increasing until a maximum point is reached;
- if the redox potential measuring probe (9) detects a negative value corresponding to said maximum point, the internal recirculation flow rate being validated as a reference flow rate;
- if the redox potential measuring probe (9) detects a positive value corresponding to said maximum point, the recirculation flow rate being further reduced until when, at said maximum point, the redox potential measuring probe (9) detects values tending to an asymptote within the range from -200 mV to -50 mV;
(b) to send a command to the variable-capacity recirculation pump (13) to increase the flow rate if the redox potential measuring probe (9) detects a value lower than -250 mV; said control unit (12) sending a command to the variable-capacity recirculation pump (13) to increase the flow rate until when, monitoring signals from the pH measuring probe (8), the redox potential measuring probe (9) detects a value within the range from -200 mV to -50 mV;
(c) to not command the variable-capacity recirculation pump (13) to modify its flow rate if the potential measuring probes (9) detects a value ranging from -200 mV to -50 mV.

2. A wastewater treatment plant (1) according to claim 1, **characterized in that** it comprises a second pH measuring probe (10), which is housed on the inside of said aerobic tank (4) and is connected to said control unit (12), a dissolved oxygen measuring probe (15), which is housed on the inside of the aerobic tank (4) and is connected to said control unit (12), and a blower (14), which is designed to blow oxygen into the aerobic tank (4) and is controlled by the control unit (12); said control unit (12) being designed to control said blower (14) according to the pH values detected by said second pH measuring probe (10).

3. A method for the management of a wastewater treatment plant (1) comprising an anoxic tank (2), in which a denitrification process takes place, an aerobic tank (4), which is designed to receive wastewater to be treated from said anoxic tank (2) and in which a nitrification process takes place, a recirculation system (6), which is designed to transfer wastewater to be treated from the aerobic tank (4) to the anoxic tank (2); said method being **characterized in that** it comprises the step of detecting redox potential values on the inside of said anoxic tank (2); the step of processing said redox potential values based on pre-set parameters; the step of detecting the pH values inside said anoxic tank (2); the step of changing the flow rate of a variable-capacity recirculation pump (13) comprised in said recirculation system based on said pre-set parameters, and the step of correlating the pH and redox potential values of said anoxic tank to determine completion of the effects due to the step of changing the flow rate of the variable-capacity recirculation pump (13); said step of changing the flow rate of the variable-capacity recirculation pump (13) entails:
(a) reducing the flow rate if the redox potential values inside said anoxic tank (2) are higher than +50 mV, the signal from the pH measuring probe (8) increasing until a maximum point is reached;
- if a negative value for the redox potential signal corresponds to this maximum point, the internal recirculation flow rate being validated as a reference flow rate;
- if the redox potential value remains positive, the flow rate being further reduced until when, at the maximum reached by the pH signal, the redox potential signal tends to an asymptote within the range from -200 mV to-50 mV;
(b) increasing the flow rate if the redox potential values inside said anoxic tank (2) are lower than -250 mV; said increasing the flow rate lasting until when, monitoring pH signals, the redox potential values are within the range from -200 mV to -50 mV.

4. A method for the management of a plant (1) for the treatment of wastewater according to claim 3, **characterized in that** it comprises a step of detecting the pH values inside said aerobic tank (4); a step of continuously processing said pH values according to pre-set parameters so as to identify the beginning and end of high, medium and low load modes; and a step of blowing oxygen into said aerobic tank (4), the flow rate of which being according to the identified load mode and being in particular increased in the high load mode and decreased when the load is medium and low.

## Patentansprüche

1. Abwasserbehandlungsanlage (1), umfassend einen anoxischen Tank, in welchem ein Denitrifikationsprozess stattfindet, einen aeroben Tank (4), welcher ausgebildet ist, zu behandelndes Abwasser aus dem besagten anoxischen Tank (2) aufzunehmen und in welchem ein Nitrifikationsprozess stattfindet, ein Umwälzsystem (6), welches ausgebildet ist, zu behandelndes Abwasser aus dem aeroben Tank (4) in den anoxischen Tank (2) zu überführen, und eine Anordnung (7) für das Management der besagten Abwasserbehandlungsanlage, wobei die besagte Anordnung (7) eine pH-Messsonde (8), welche im Inneren des anoxischen Tanks (2) untergebracht ist, eine Redoxpotential-Messsonde (9), welche im Inneren des anoxischen Tanks (2) untergebracht ist, eine Steuereinheit (12), welche ausgebildet ist, Signale von der pH-Messsonde (8) und der Redoxpotential-Messsonde (9) zu empfangen, und eine Umwälzpumpe (13) mit variabler Kapazität umfasst, welche in das besagte Umwälzungssystem (6) eingeführt ist und von der Steuereinheit (12) gesteuert wird; wobei die besagte Steuereinheit (12) ausgebildet ist:
(a) einen Befehl an die Umwälzpumpe (13) mit variabler Kapazität zu senden, um die Strömungsrate zu reduzieren, wenn die Redoxpotential-Messsonde (9) einen Wert höher als +50 mV detektiert, und um mit der Überwachung des pH-Signals von der pH-Messsonde (8) zu beginnen, wobei das besagte Signal von der pH-Messsonde (8) ansteigt, bis ein Maximalpunkt erreicht ist;
- wenn die Redoxpotential-Messsonde (9) einen negativen Wert detektiert, der dem besagten Maximalpunkt entspricht, wird die interne Umwälzströmungsrate als Referenzströmungsrate validiert;
- wenn die Redoxpotential-Messsonde (9) einen positiven Wert detektiert, der dem besagten Maximalpunkt entspricht, wird die Umwälzströmungsrate weiter reduziert, bis die Redoxpotential-Messsonde (9) an dem besagten Maximalpunkt Werte detektiert, die zu einer Asymptote innerhalb des Bereichs von -200 mV bis -50 mV tendieren;
(b) einen Befehl an die Umwälzpumpe (13) mit variabler Kapazität zu senden, um die Strömungsrate zu erhöhen, wenn die Redoxpotential-Messsonde (9) einen Wert von weniger als -250 mV detektiert; wobei die besagte Steuereinheit (12) einen Befehl an die Umwälzpumpe (13) mit variabler Kapazität sendet, um die Strömungsrate zu erhöhen, bis die Redoxpotential-Messsonde (9) bei der Überwachung von Signalen von der pH-Messsonde (8) einen Wert innerhalb des Bereichs von -200 mV bis -50 mV detektiert;
(c) die Umwälzpumpe (13) mit variabler Kapazität nicht zu steuern, um ihre Strömungsrate zu ändern, wenn die Potential-Messsonde (9) einen Wert im Bereich von -200 mV bis -50 mV detektiert.

2. Abwasserbehandlungsanlage (1) nach Anspruch 1, **dadurch gekennzeichnet, dass** sie eine zweite pH-Messsonde (10), welche im Inneren des besagten aeroben Tanks (4) untergebracht und mit der besagten Steuereinheit (12) verbunden ist, eine Messsonde (15) für gelösten Sauerstoff, welche im Inneren des besagten aeroben Tanks (4) untergebracht und mit der besagten Steuereinheit (12) verbunden ist, und ein Gebläse (14) umfasst, welches ausgebildet ist, Sauerstoff in den aeroben Tank (4) zu blasen und von der Steuereinheit (12) gesteuert wird; wobei die besagte Steuereinheit (12) ausgebildet ist, das besagte Gebläse (14) entsprechend den von der besagten zweiten pH-Messsonde (10) erfassten pH-Werten zu steuern.

3. Verfahren zum Management einer Abwasserbehandlungsanlage (1), umfassend einen anoxischen Tank (2), in welchem ein Denitrifikationsprozess stattfindet, einen aeroben Tank (4), welcher ausgebildet ist, zu behandelndes Abwasser aus dem besagten anoxischen Tank (2) aufzunehmen und in welchem ein Nitrifikationsprozess stattfindet, ein Umwälzsystem (6), welches ausgebildet ist, zu behandelndes Abwasser aus dem aeroben Tank (4) in den anoxischen Tank (2) zu überführen; wobei das besagte Verfahren **dadurch gekennzeichnet ist, dass** es den Schritt des Detektierens von Redoxpotentialwerten im Inneren des besagten anoxischen Tanks (2) umfasst; den Schritt des Verarbeitens der besagten Redoxpotentialwerte auf der Grundlage voreingestellter Parameter; den Schritt des Detektierens der pH-Werte im Inneren des besagten anoxischen Tanks (2); den Schritt des Änderns der Strömungsrate einer Umwälzpumpe (13) mit variabler Kapazität, die in dem besagten Umwälzsystem enthalten ist, basierend auf den besagten voreingestellten Parametern, und den Schritt des Korrelierens der pH- und Redoxpotentialwerte des besagten anoxischen Tanks, um den Abschluss der Effekte aufgrund des Schritts des Änderns der Strömungsrate der Umwälzpumpe (13) mit variabler Kapazität zu bestimmen; wobei der besagte Schritt des Änderns der Strömungsrate der Umwälzpumpe (13) mit variabler Kapazität folgende Schritte beinhaltet:
(a) Reduzieren der Strömungsrate, wenn die Redoxpotentialwerte im Inneren des besagten anoxischen Tanks (2) höher als +50 mV sind, wobei das Signal von der pH-Messsonde (8) ansteigt, bis ein Maximalpunkt erreicht ist;
- wenn ein negativer Wert für das Redoxpotentialsignal diesem Maximalpunkt entspricht, wird die interne Umwälzströmungsrate als Referenzströmungsrate validiert;
- wenn der Wert des Redoxpotentials positiv bleibt, wird die Strömungsrate weiter reduziert, bis bei dem vom pH-Signal erreichten Maximum das Redoxpotentialsignal zu einer Asymptote im Bereich von -200 mV bis -50 mV tendiert;
(b) Erhöhen der Strömungsrate, wenn die Redoxpotentialwerte im Inneren des besagten anoxischen Tanks (2) niedriger als -250 mV sind; wobei das besagte Erhöhen der Strömungsrate solange andauert, bis bei der Überwachung der pH-Signale die Redoxpotentialwerte im Bereich von -200 mV bis -50 mV liegen.

4. Verfahren zum Management einer Anlage (1) für die Behandlung von Abwasser nach Anspruch 3, **dadurch gekennzeichnet, dass** es einen Schritt des Detektierens der pH-Werte im Inneren des besagten aeroben Tanks (4); einen Schritt des kontinuierlichen Verarbeitens der besagten pH-Werte gemäß voreingestellten Parametern, um den Beginn und das Ende von Hoch-, Mittel- und Niedriglastmodi zu identifizieren; und einen Schritt des Einblasens von Sauerstoff in den besagten aeroben Tank (4) umfasst, dessen Strömungsrate gemäß dem identifizierten Lastmodus ist und insbesondere im Hochlastmodus erhöht wird und verringert wird, wenn die Last mittel und niedrig ist.

## Revendications

1. Usine de traitement d'eaux usées (1) comprenant un réservoir anoxique (2), dans lequel se déroule un processus de dénitrification, un réservoir aérobie (4), qui est destiné à recevoir des eaux usées à traiter en provenance dudit réservoir anoxique (2) et dans lequel se déroule un processus de nitrification, un système de recirculation (6), qui est destiné à transférer des eaux usées à traiter du réservoir aérobie (4) au réservoir anoxique (2), et un ensemble (7) pour la gestion de ladite usine de traitement d'eaux usées, ledit ensemble (7) comprenant une sonde de mesure de pH (8), qui est logée à l'intérieur dudit réservoir anoxique (2), une sonde de mesure de potentiel d'oxydo-réduction (9), qui est logée à l'intérieur du réservoir anoxique (2), une unité de contrôle (12), qui est destinée à recevoir des signaux en provenance de la sonde de mesure de pH (8) et de la sonde de mesure de potentiel d'oxydoréduction (9), et une pompe volumétrique de recirculation (13), qui est insérée dans ledit système de recirculation (6) et qui est contrôlée par l'unité de contrôle (12) ; ladite unité de contrôle (12) étant conçue :
(a) pour envoyer une commande à la pompe volumétrique de recirculation (13) pour réduire le débit si la sonde de mesure de potentiel d'oxydo-réduction (9) détecte une valeur supérieure à +50 mV, et pour commencer la surveillance du signal de pH en provenance de la sonde de mesure de pH (8), ledit signal en provenance de la sonde de mesure de pH (8) augmentant jusqu'à ce qu'un point maximum soit atteint ;
si la sonde de mesure de potentiel d'oxydoréduction (9) détecte une valeur négative correspondant audit point maximum, le débit interne de recirculation étant validé comme débit de référence ;
si la sonde de mesure de potentiel d'oxydoréduction (9) détecte une valeur positive correspondant audit point maximum, le débit de recirculation étant davantage réduit jusqu'à ce que, audit point maximum, la sonde de mesure de potentiel d'oxydo-réduction (9) détecte des valeurs qui tendent vers une asymptote dans la plage de -200 mV à -50 mV ;
(b) pour envoyer une commande à la pompe volumétrique de recirculation (13) pour augmenter le débit si la sonde de mesure de potentiel d'oxydoréduction (9) détecte une valeur inférieure à -250 mV ; ladite unité de contrôle (12) envoyant une commande à la pompe volumétrique de recirculation (13) pour augmenter le débit jusqu'à ce que, en contrôlant des signaux en provenance de la sonde de mesure de pH (8), la sonde de mesure de potentiel d'oxydo-réduction (9) détecte une valeur dans la plage de -200 mV à -50 mV ;
(c) pour ne pas commander à la pompe volumétrique de recirculation (13) de modifier son débit si la sonde de mesure de potentiel d'oxydo-réduction (9) détecte une valeur comprise entre -200 mV et -50 mV.

2. Usine de traitement d'eaux usées (1) selon la revendication 1, **caractérisée en ce qu'**elle comprend une seconde sonde de mesure de pH (10), qui est logée à l'intérieur dudit réservoir aérobie (4) et qui est connectée à ladite unité de contrôle (12), une sonde de mesure d'oxygène dissous (15), qui est logée à l'intérieur du réservoir aérobie (4) et qui est connectée à ladite unité de contrôle (12), et un ventilateur (14), qui est destiné à souffler de l'oxygène dans le réservoir aérobie (4) et qui est contrôlé par l'unité de contrôle (12) ; ladite unité de contrôle (12) étant conçue pour contrôler ledit ventilateur (14) selon les valeurs de pH détectées par ladite seconde sonde de mesure de pH (10).

3. Procédé pour la gestion d'une usine de traitement d'eaux usées (1) comprenant un réservoir anoxique (2), dans lequel se déroule un processus de dénitrification, un réservoir aérobie (4), qui est destiné à recevoir des eaux usées à traiter en provenance dudit réservoir anoxique (2) et dans lequel se déroule un processus de nitrification, un système de recirculation (6), qui est destiné à transférer des eaux usées à traiter du réservoir aérobie (4) au réservoir anoxique (2) ; ledit procédé étant **caractérisé en ce qu'**il comprend l'étape de détection de valeurs de potentiel d'oxydo-réduction à l'intérieur dudit réservoir anoxique (2) ; l'étape de traitement desdites valeurs de potentiel d'oxydoréduction sur la base de paramètres prédéfinis ; l'étape de détection des valeurs de pH à l'intérieur dudit réservoir anoxique (2) ; l'étape de modification du débit d'une pompe volumétrique de recirculation (13) comprise dans ledit système de recirculation sur la base desdits paramètres prédéfinis, et l'étape de corrélation des valeurs de pH et de potentiel d'oxydo-réduction dudit réservoir anoxique pour déterminer la fin des effets dus à l'étape de modification du débit de la pompe volumétrique de recirculation (13) ; ladite étape de modification du débit de la pompe volumétrique de recirculation (13) entraînant :
(a) la réduction du débit si les valeurs de potentiel d'oxydo-réduction à l'intérieur dudit réservoir anoxique (2) sont supérieures à +50 mV, le signal en provenance de la sonde de mesure de pH (8) augmentant jusqu'à ce qu'un point maximum soit atteint ;
si une valeur négative pour le signal de potentiel d'oxydo-réduction correspond à ce point maximum, le débit interne de recirculation étant validé comme débit de référence ;
si la valeur de potentiel d'oxydo-réduction reste positive, le débit étant davantage réduit jusqu'à ce que, au maximum atteint par le signal de pH, le signal de potentiel d'oxydo-réduction tende vers une asymptote dans la plage de -200 mV à - 50 mV ;
(b) l'augmentation du débit si les valeurs de potentiel d'oxydo-réduction à l'intérieur dudit réservoir anoxique (2) sont inférieures à -250 mV ; ladite augmentation du débit durant jusqu'à ce que, en contrôlant des signaux de pH, les valeurs de potentiel d'oxydo-réduction soient dans la plage de -200 mV à - 50 mV.

4. Procédé pour la gestion d'une usine (1) pour le traitement d'eaux usées selon la revendication 3, **caractérisé en ce qu'**il comprend une étape de détection des valeurs de pH à l'intérieur dudit réservoir aérobie (4) ; une étape de traitement en continu desdites valeurs de pH selon des paramètres prédéfinis afin d'identifier le début et la fin de modes à charge élevée, moyenne et basse ; et une étape de soufflage d'oxygène dans ledit réservoir aérobie (4), dont le débit dépend du mode de charge identifié et est notamment augmenté dans le mode à charge élevée et réduit quand la charge est moyenne et basse.
